Europäisches Patentamt

European Patent Office

Office européen des brevets

(11) Publication number: **0 241 608**
A1

## (12) EUROPEAN PATENT APPLICATION

(21) Application number: 86302865.0

(22) Date of filing: 17.04.86

(51) Int. Cl.⁴: **G01V 1/20** , G01V 1/38

(43) Date of publication of application:
**21.10.87 Bulletin 87/43**

(84) Designated Contracting States:
**DE FR IT**

(71) Applicant: **STC PLC**
**10, Maltravers Street**
**London, WC2R 3HA(GB)**

Applicant: **BRITOIL PLC**
**150 St. Vincent Street**
**Glasgow, G2 5LJ(GB)**

(72) Inventor: **Bryant, Michael John**
**4 Ingleby Way**
**Chislehurst Kent. BR7 6DD(GB)**
Inventor: **Attenborough, Frank Richard**
**40 Grosvenor Road**
**Petts Wood Orpington Kent(GB)**
Inventor: **Sykes, Christopher Graham**
**48 Compton Road**
**London, N.1. 2PB(GB)**

(74) Representative: **Capsey, Sydney Ross**
**Standard Telephones and Cables Patent**
**Department Edinburgh Way**
**Harlow Essex CM20 2SH(GB)**

(54) **Node for towed accoustic array.**

(57) A flexible node for a towed acoustic array or seismic streamer comprises a plurality of canisters 10, 11 attached by clamps 10c, 11c to strain ropes 12. The node is encased in a flexible sheath 13 and filled with a buoyany gel. Flexibility of the node allows it to pass over winches, the strain ropes transmitting towing strains without stressing the individual canisters.

EP 0 241 608 A1

## NODE FOR TOWED ACOUSTIC ARRAY

This invention relates to a node for a towed acoustic array or seismic streamer.

Typically a towed acoustic array includes one or more long flexible hydrophone assemblies in which the hydrophones are spaced at intervals within a flexible sheath, e.g. a plastics hose. Each sheathed assembly is headed by a so-called "node", which contains electronic and power equipment for the hydrophones in the assembly. The node for each assembly in addition incorporates towing means whereby the assembly is attached to the towing cable payed out from a ship, or to the tail of the preceding assembly where more than one assembly is used. The node is therefore required to contain a significant amount of electronic and electrical hardware in a waterproof environment and to possess considerable strength to withstand the towing strains. Known forms of node are encased in rigid metal housings which lack buoyancy, are difficult to handle on winches and drums, and generate vibration.

According to the present invention there is provided a flexible node for a towed acoustic array comprising a plurality of individual waterproof canisters each containing a part of the electronic and electrical hardware of the node, the canisters being encased in a flexible sheath together with one or more strain ropes or the like extending longitudinally within the flexible sheath, the canisters being attached to the strain rope or ropes.

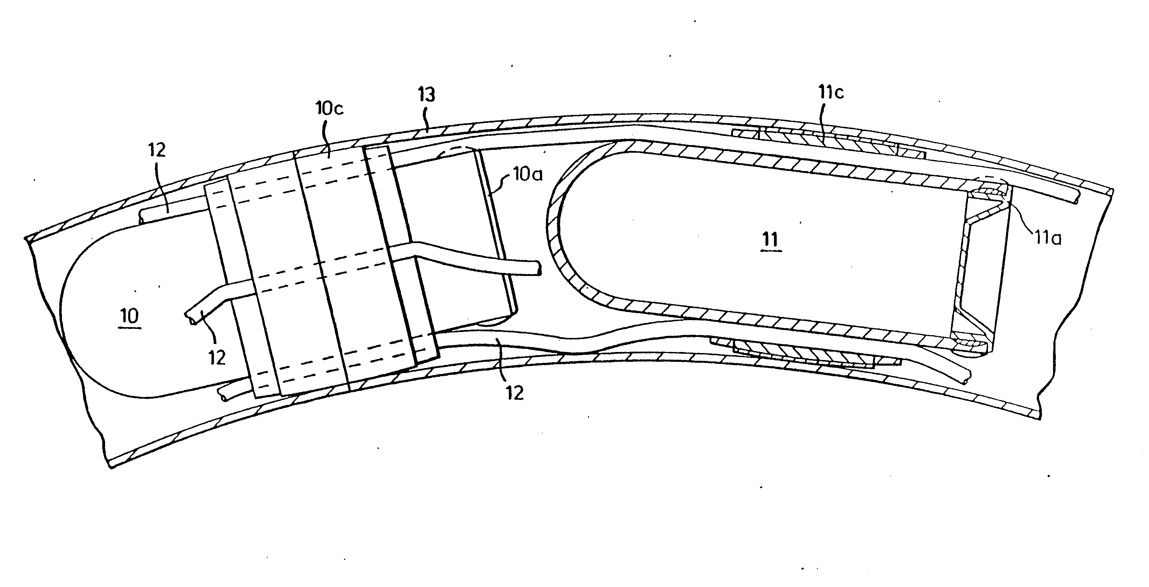

Embodiments of the invention will now be described with reference to the accompanying drawing which illustrates the internal structure of a flexible node.

The flexible node comprises a number of individual waterproof canisters 10,11 each containing a certain amount of electronic or electrical circuitry (not shown). As illustrated the canisters are aluminium or other metal containers closed by screw on end caps 10a,11a. Alternatively the containers may be thin walled aluminium inners encased in glass reinforced plastics to provide them with strength. The screw caps are provided with hermetic lead throughs for electrical cables in a known manner. Each canister is located within, and may be attached to, four Kevlar ropes 12 which are equally spaced around the canisters. Each canister has a split clamp 10c,11c which clamps the ropes to the canister. The whole assembly of canisters and ropes is encased in a flexible plastics tube 13. After assembly the remaining space in the plastics tube is filled with a buoyancy liquid or gel to provide the node with the required buoyancy.

The node, being flexible, is readily passed over winches and drums on board ship. The four ropes individually or collectively transmit the towing strain from the front of the node to the following hydrophone assembly without stressing the individual canisters. Individual canisters can be removed for replacement or repair without disturbing the other canisters. Electric cabling can be laid alongside the strain ropes, e.g. in grooves or bores in the clamps where the latter are cylindrical. The number of ropes may obviously be varied according to design requirements. In an alternative construction a single central strain rope may be used, threaded through the centre of cylindrical canisters.

### Claims

1. A flexible node for a towed acoustic array characterised in that a plurality of individual waterproof canisters each containing a part of the electronic and electrical hardware of the node are encased in a flexible sheath together with one or more strain ropes or the like extending longitudinally within the flexible sheath, the canisters being attached to the strain rope or ropes.

2. A flexible node according to claim 1 characterised in that the strain ropes are spaced around the periphery of the canisters.

3. A flexible node according to claim 2 characterised in that the strain ropes are secured to the canisters by clamp members.

4. A flexible node according to claim 3 characterised in that electric cables are laid in grooves or bores in the clamps.

5. A flexible node according to claim 1 characterised in that a single strain rope is threaded through the centres of the canisters.

6. A flexible node according to any preceding claim characterised in that after assembly of the canisters, ropes and clamps within the sheath the mode is filled with a buoyancy liquid or gel.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 551 221   (ATELIERS DE SAINT-GAUDENS) <br> * Page 2, line 11 - page 3, line 20; claims 1,2; figure 1 * | 1,2,6 | G 01 V   1/20 <br> G 01 V   1/38 |
| | --- | | |
| Y | US-A-4 086 561   (D.W. WOODDY) <br> *  Column 4, lines 4-21; figure 5 * | 1,2,6 | |
| | --- | | |
| A | US-A-3 794 965   (C.J. CHARSKE) <br> * Column 4, line 33 -  column  5, line 34; figures 1,3 * | 1-3,6 | |
| | ----- | | |

TECHNICAL FIELDS
SEARCHED (Int. Cl.4)

G 01 V
G 10 K

The present search report has been drawn up for all claims

| Place of search | Date of completion of the search | Examiner |
|---|---|---|
| THE HAGUE | 11-12-1986 | HAASBROEK J.N. |